(19) **Europäisches Patentamt**

**European Patent Office**

**Office européen des brevets**

(11) Veröffentlichungsnummer: **0 014 176**
**B1**

(12) **EUROPÄISCHE PATENTSCHRIFT**

(45) Veröffentlichungstag der Patentschrift:
22.12.82

(21) Anmeldenummer: 80810009.3

(22) Anmeldetag: 09.01.80

(51) Int. Cl.³: **B 60 K 1/04**

(54) Elektrowagen.

(30) Priorität: 09.01.79 CH 180/79

(43) Veröffentlichungstag der Anmeldung:
06.08.80 Patentblatt 80/16

(45) Bekanntmachung des Hinweises auf die Patenterteilung:
22.12.82 Patentblatt 82/51

(84) Benannte Vertragsstaaten:
AT BE CH DE FR GB IT LU NL SE

(56) Entgegenhaltungen:
FR-A-749 462
FR-A-798 464
FR-A 2 387 814

Automobiltechnisches Handbuch, Bussien, 2-Band,
Berlin 1965, S. 896, 897
Die Fahrgestelle der Pkw, Stuttgart 1956, S. 234-241

(73) Patentinhaber: Sbarro, Francesco, Route de Lausanne,
CH-1411 Les Tuileries-de-Grandson Kanton Waadt (CH)
Patentinhaber: Vessa, société anonyme de construction
de vehicules electriques, de developpement et de
recherche, Rue du Lac 115 Clarens chez SRE,
CH-1820 Montreux (Kanton Waadt) (CH)

(72) Erfinder: Sbarro, Francesco, Route de Lausanne,
CH-1411 Les Tuileries-de-Grandson (CH)

(74) Vertreter: Bovard, Fritz Albert et al, Bovard & Cie.
Patentanwälte VSP-Rechtsanwälte Optingenstrasse 16,
CH-3000 Bern 25 (CH)

## Elektrowagen

Die Erfindung betrifft einen Elektrowagen, mit einem vorderen und einem hinteren Fahrwerk sowie einer selbsttragenden Karosserie, wobei das hintere Fahrwerk als selbständige Antriebseinheit mit Elektrobatterien und mindestens einem Elektromotor gebildet ist.

Ein solcher Elektrowagen ist aus der FR-A-2 387 814 bekannt. Bei dem dort beschriebenen Elektrowagen bildet das hintere Fahrwerk eine Einheit. An der Karosserie sind Gleitstangen befestigt, auf welchen auf dem Rahmen der Einheit befestigte Klauen gleiten können. Somit kann die Einheit in axialer Richtung des Fahrzeuges in beschränktem Ausmass nach hinten hinausgezogen werden. Das Herausschieben der Einheit geschieht durch Betätigung von elektrischen Motoren, wobei die Räder des hinteren Fahrwerkes auf dem Boden rollen. Vorerst muss aber eine Blockierungseinrichtung gelöst werden.

Der Nachteil dieses Elektrowagens besteht darin, dass das hintere Fahrwerk mit Batterien, elektrischen Motoren usw. nur teilweise in axialer Richtung des Fahrwerkes hinausgezogen werden kann, wobei er immer mit dem vorderen Fahrwerk verbunden bleibt. Zum Herausfahren des hinteren Fahrwerkes werden elektrische Motoren gebraucht, wobei auch zusätzliche Massnahmen beim Herausschieben des hinteren Fahrwerkes getroffen werden müssen. Durch all dies wird viel Zeit benötigt, um das hintere Fahrwerk mit den Motoren, Batterien usw. hinauszufahren. In jedem Fall wird der Zugang zu dem herausgefahrenen hinteren Fahrwerk mindestens an der der Karosserie des Elektrowagens zugekehrten Seite blockiert bleiben. Dadurch ist der Service erschwert.

Es ist die Aufgabe der Erfindung, die Nachteile dieses bekannten Elektrowagens zu beseitigen und einen Elektrowagen zu schaffen, der so konstruiert ist, dass seine Elektrobatterien gut zugänglich sind, um deren Service leichter zu machen. Des weiteren sollen die aus den Elektrobatterien ausströmenden Gase nicht in den Fahrraum eindringen.

Diese Aufgaben werden erfindungsgemäss bei dem eingangs erwähnten Elektrowagen auf solche Weise gelöst, dass das hintere Fahrwerk als selbständige Antriebseinheit mit Elektrobatterien gebildet ist, die durch Aufheben der Karosserie bei Stillstand des Elektrowagens von dem vorderen Fahrwerk und der mit ihm verbundenen Karosserie abnehmbar ist.

Mit Vorteil ist die Antriebseinheit eine wasserdichte, mindestens die Elektrobatterien umschliessende Schale, an welcher die Hinterräder aufgehängt sind. Die Antriebseinheit kann an der Karosserie in mindestens zwei Punkten schwenkbar angeordnet sein.

Der Erfindungsgegenstand wird nachstehend anhand der Zeichnungen beispielsweise näher erläutert. Es zeigen:

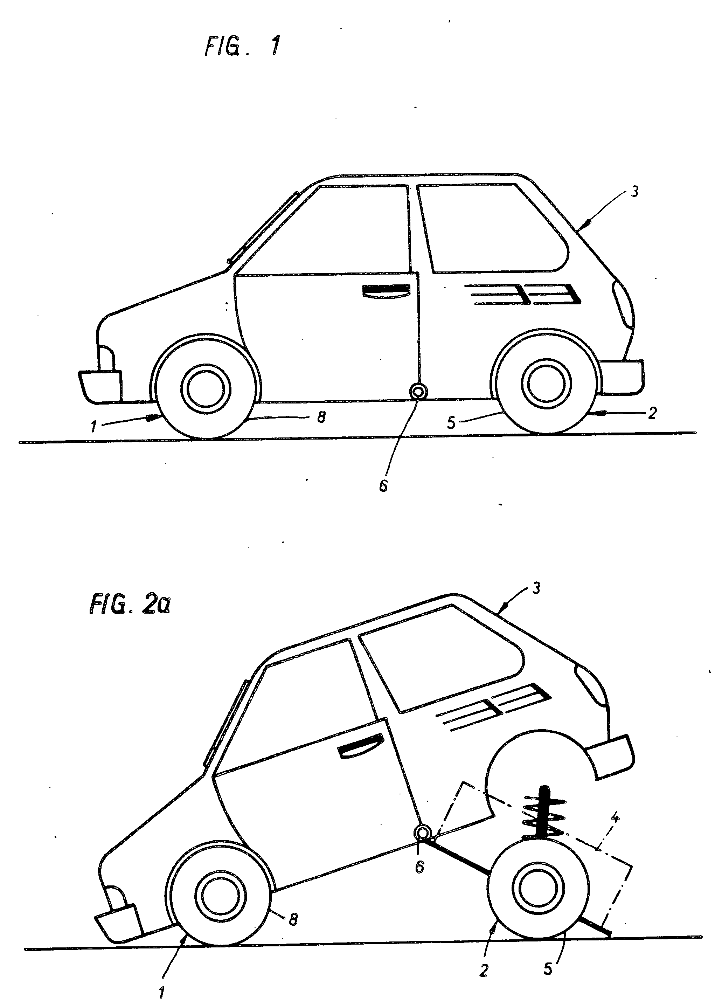

Fig. 1 eine schematische Ansicht eines Elektrowagens,

Fig. 2a eine Ansicht des Elektrowagens nach der Fig. 1 im aufgehobenen Zustand, wobei die Antriebseinheit an der Karosserie in geknickter Position aufgehängt ist,

Fig. 2b eine Ansicht des Hinterteiles des Elektrowagens nach der Fig. 1, mit der von der Karosserie abgetrennten Antriebseinheit mit Elektrobatterien und Hinterrädern und

Fig. 3 eine Draufsicht auf die von der Karosserie des Elektrowagens getrennte Antriebseinheit.

Der Elektrowagen weist ein vorderes Fahrwerk 1 mit vorderen Rädern 8, ein hinteres Fahrwerk 2 mit hinteren Rädern 5 und eine selbsttragende Karosserie 3 auf. Das hintere Fahrwerk 2 ist als selbständige Antriebseinheit gebildet, die an der Karosserie in mindestens zwei Aufhängepunkten 6 aufgehängt ist. Die Antriebseinheit bildet neben dem vorderen Fahrwerk 1 und der Karosserie 3 eine selbständige Antriebseinheit mit Elektrobatterien 4, einem nicht dargestellten Motor, einem nicht dargestellten Getriebe und mit den daran aufgehängten hinteren Rädern 5. Um das Eindringen der aus den Elektrobatterien 4 ausströmenden Gase in den Fahrraum zu verhindern, sind Elektrobatterien 4, der Motor und das Getriebe in einer wasserdichten Schale eingeschlossen. Die gesamte Antriebseinheit ist beim Aufheben des Elektrowagens z. B. durch ein Hebewerkzeug, von dem vorderen Fahrwerk 1 und der mit ihm verbundenen Karosserie 3 abtrennbar.

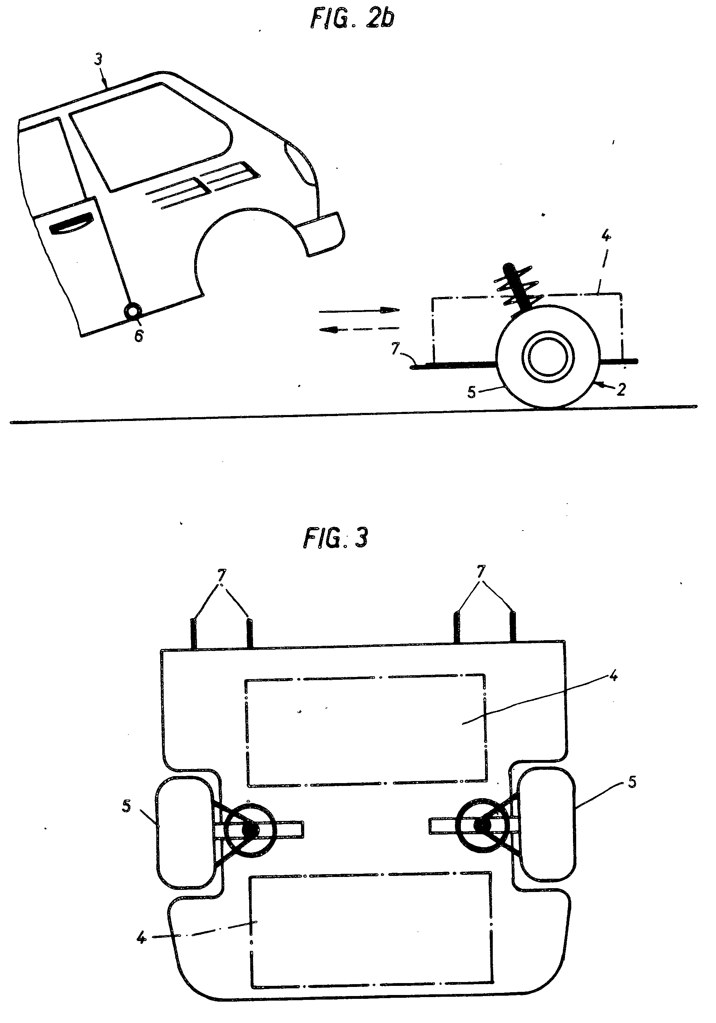

Wie aus der Fig. 3 ersichtlich ist, sind bei dieser Ausführungsform am vorderen Teil der Antriebseinheit 4 Aufhängebolzen 7 vorgesehen, die im zusammengekuppelten Zustand des hinteren Fahrwerkes 2 mit der Karosserie 3 hinter eine quer zur Fahrtrichtung verlaufende, nicht dargestellte Achse einschnappen. Die Aufhängung der Antriebseinheit an der Karosserie 3 kann auf zwei Drehpunkte mit zwei Flügelbolzen reduziert werden (auch die Flügelbolzen sind aber nicht unbedingt notwendig, weil die Antriebseinheit durch das Gesamtgewicht des Wagens sicher auf der Achse der Karosserie aufgehängt werden kann); sie kann auch auf andere Weise gelöst werden.

Im Falle einer Panne oder wenn die Elektrobatterien aufgeladen oder getestet werden sollen, wird die oben beschriebene Antriebseinheit von der Karosserie 3 schnell abgetrennt und die Elektrobatterien einfach aufgeladen oder ausgetauscht. Durch die wasserdichte Schale wird der Fahrraum für den Fahrer von Gasemissionen aus den Elektrobatterien und vom Lärm des Motors isoliert. Die oben erwähnte, von der Karosserie getrennte Antriebseinheit schafft einen unbehinderten Zugang zu allen mechanischen, elektrischen und elektronischen Elementen des Elektrowagens. Durch das Aufhängen der Antriebseinheit an der Karosserie wird eine funktionelle Zusammenlegung der Antriebs- und Bremselemente erreicht. Die oben beschriebene Antriebseinheit schützt weiter die empfindlichen Hochspannungselemente oder elektronischen Elemente gegen unbefugte Behandlung.

Durch den einfachen Anschluss der Antriebseinheit an die Karosserie wird Raum gespart, das Gewicht des Elektrowagens herabgesetzt und der Fahrraum vergrössert; somit kann auch das Gewicht des vorderen Fahrwerkes vermindert und seine Manövrierbarkeit erhöht werden. Die Antriebseinheit eignet sich sowohl für den schon vorhandenen Elektrowagen als auch für die geplanten Elektrofahrzeuge. Sie kann auch für zukünftige Elektrobatterien mit einer hohen Leistung Verwendung finden.

**Patentansprüche**

1. Elektrowagen, mit einem vorderen und einem hinteren Fahrwerk (1, 2) sowie einer selbsttragenden Karosserie (3), wobei das hintere Fahrwerk (2) als selbständige Antriebseinheit mit Elektrobatterien und mindestens einem Elektromotor gebildet ist, dadurch gekennzeichnet, dass die Antriebseinheit an der Karosserie (3) in mindestens zwei Punkten (6) in vertikaler Ebene ausschwenkbar aufgehängt und durch Aufheben der Karosserie (3) bei Stillstand des Elektrowagens von derselben unter Unterbrechung der Antriebs- und Bremsverbindungen abnehmbar ist.

2. Elektrowagen nach Anspruch 1, dadurch gekennzeichnet, dass die Antriebseinheit eine wasserdichte, mindestens die Elektrobatterien (4) umschliessende Schale umfasst, an welcher die Hinterräder anfgehängt sind.

**Claims**

1. Electric car having a front and a rear chassis (1, 2) as well as a self-supporting body (3), the rear chassis (2) being formed as an independent driving unit with electric batteries and at least one electric motor, characterized in that the driving unit is suspendet on the body (3) at at least two points (6) so that it can be swung out in the vertical plane and, by lifting the body (3) when the electric car is at a standstill, is removable from the body with interruption of the driving and braking connections.

2. Electric car according to claim 1, characterized in that the driving unit comprises a waterproof shell enclosing at least the electric batteries (4), on which shell the rear wheels (5) are suspended.

**Revendications**

1. Voiture électrique comprenant un dispositif de roulement avant (1) et un dispositif de roulement arrière (2), de même qu'une carrosserie autoporteuse (3), le dispositif de roulement arrière (2) constituant une unité d'entraînement autonome avec une batterie d'accumulateurs électriques et au moins un moteur électrique, caractérisée en ce que l'unité d'entraînement est suspendue de façon articulée à la carrosserie (3) en plan vertical en au moins deux points (6) et est apte à être enlevée, la voiture électrique étant arrêtée par soulèvement loin d'elle de la carrosserie (3) alors que les liaisons de commande d'entraînement et le freinage sont interrompues.

2. Voiture électrique selon la revendication 1, caractérisée en ce que l'unité d'entraînement comprend une enveloppe étanche à l'eau entourant au moins la batterie d'accumulateurs électriques (4) et à laquelle les roues arrière (6) sont suspendues.

FIG. 1

FIG. 2a

## FIG. 2b

## FIG. 3